# EUROPÄISCHE PATENTANMELDUNG

(11) **EP 1 286 322 A1**
(43) Veröffentlichungstag der Anmeldung: **26.02.2003**
(21) Anmeldenummer: 01119042.8
(22) Anmeldetag: 07.08.2001
(51) Int. Cl.: G09B 9/00

(54) **Simulationssystem, inbesondere für eine Kraftwerksanlage**

(71) Anmelder: SIEMENS AKTIENGESELLSCHAFT, 80333 München (DE)
(72) Erfinder: Kleyer, Dieter, 91074 Herzogenaurach (DE)

(57) **Zusammenfassung**

Ein erfindungsgemäßes Simulationssystem (5) umfasst einen Simulationsrechner (7) mit einem Web-Server (25) und einen Client-Rechner (35) mit einem Internet-Browser (40). Auf dem Simulationsrechner (7) ist ein Verfahrenstechnik-Prozessmodell (10) einer technischen Anlage verfügbar, auf welches durch den Client-Rechner (35) über das Internet (30) zugegriffen werden kann. In bevorzugten Ausführungsformen umfasst der Simulationsrechner (7) außerdem ein Automatisierungstechnik-Prozessmodell (15) der technischen Anlage, eine Bedien- und Beobachtungssoftware (20) und ein Projektierungswerkzeug (45) zum Ändern der genannten Programme des Simulationsrechners.

## Beschreibung

Die Erfindung betrifft ein Simulationssystem, mittels welchem insbesondere das Wartenpersonal des Kraftwerks zur Erzeugung von elektrischer Energie geschult werden kann.

Trainingssimulatoren werden zunehmend eingesetzt, um Wartenpersonal für den Betrieb eines Kraftwerks zu schulen und um Ausnahmesituationen und kritische Betriebszustände zu trainieren, welche beim tatsächlichen Betrieb des Kraftwerks auftreten können. Während in der Vergangenheit derartige Simulatoren fast ausschließlich bei Großanlagen, die in ihrem Aufbau und Betrieb meist Individuallösungen sind, zum Einsatz kamen, werden jetzt zunehmend auch bei kleineren Anlagen Simulatoren zu Trainingszwecken eingesetzt, insbesondere bei Gas- und -Dampf-Anlagen (GuD), welche auch bei unterschiedlicher Ausführungsform in ihrer prinzipiellen Betriebsweise sehr ähnlich sind.

Um den Betrieb einer Kraftwerksanlage möglichst realistisch auf einem Rechner nachzubilden, ist es erforderlich, sowohl den verfahrenstechnischen Prozess, welcher in einem realen Kraftwerk abläuft und das Betriebsverhalten und Zusammenwirken der Kraftwerkskomponenten betrifft, als auch den automatisierungstechnischen Prozess, welcher das zur Bedienung und Steuerung eingesetzte Prozessleitsystem mit seinen Automatisierungs- und Bedien- und Beobachtungskomponenten umfasst, mit Hilfe von komplexer Software zu simulieren.

Der dafür nötige Aufwand erfordert meist eine gigantische Rechnerleistung des eingesetzten Simulationsrechners. Die Hardware für den Simulationsrechner muss an jedem Schulungsort aufgebaut, installiert und gewartet werden.

Derartige, vor Ort installierte Trainingssimulatoren werden meistens nur zeitweise genutzt.

Der Erfindung liegt daher die Aufgabe zugrunde, ein Simulationssystem, insbesondere für den Einsatz zu Schulungszwecken für den Betrieb einer Kraftwerksanlage, anzugeben, welches flexibel einsetzbar ist, keine hohen Investitionskosten verursacht und insbesondere zur Simulation mehrerer Kraftwerksanlagen geeignet ist. Des Weiteren soll der Installationsort des Simulationssystems praktisch frei wählbar sein, so dass die Notwendigkeit überwunden wird, das Simulationssystem direkt bei oder in der Kraftwerksanlage zu installieren.

Die Aufgabe wird erfindungsgemäß gelöst durch ein Simulationssystem, welches folgende Komponenten aufweist:
a) mindestens einen Simulationsrechner, welcher mindestens ein Verfahrenstechnik-Prozessmodell einer zu simulierenden technischen Anlage als Softwareprogramm und einen Web-Server zur Anbindung an das Internet und/oder ein Intranet umfasst, so dass ein Zugriff auf das Prozessmodell über das Internet und/oder das Intranet durchführbar ist, und
b) mindestens einem Client-Rechner, welcher einen Internet-Browser zur Anbindung des Client-Rechners an das Internet und/oder das Intranet umfasst.

Die Erfindung geht dabei von der Überlegung aus, dass durch die Verfügbarkeit des Internets der Client-Rechner, mit welchem das Simulationssystem bedient wird, räumlich vom Simulationsrechner, welcher die Prozessmodelle zur Simulierung der Kraftwerksanlage enthält, getrennt werden kann. Dadurch ist es weiterhin möglich, im Simulationsrechner Prozessmodelle für verschiedene Kraftwerksanlagen zu implementieren, auf welche dann gezielt über das Internet von verschiedenen Orten aus, beispielsweise zu Trainingszwecken, zugegriffen werden kann. Es ist also nicht mehr erforderlich, für jede Kraftwerksanlage einen separaten Simulationsrechner, welcher meist sehr kostspielig ist, bereitzuhalten. Ein zu schulendes Wartenpersonal einer Kraftwerksanlage muss lediglich über den Client-Rechner verfügen, welcher im Wesentlichen nur einen weitverbreiteten und bekannten Internet-Browser aufweisen muss; eine spezielle Software muss auf dem Client-Rechner meist nicht installiert sein.

Besonders vorteilhaft kann das Simulationssystem zur Schulung des Wartenpersonals von GuD-Anlagen eingesetzt werden, da sich diese Anlagen generell durch einen ähnlichen Anlagenaufbau auszeichnen und Fahrweise und Betrieb von GuD-Anlagen prinzipiell nicht voneinander abweichen, so dass die grundsätzlichen Anforderungen an Fahrweise und Betrieb von GuD-Anlagen praktisch identisch sind. Der Simulationsrechner, welcher beispielsweise ein Prozessmodell einer GuD-Anlage enthält, kann dann vorteilhaft vom Wartenpersonal mehrerer unterschiedlicher GuD-Anlagen zu Schulungszwecken benutzt werden. Derartige Simulationsrechner können als Basissimulatoren für eine Reihe von GuD-Anlagen eingesetzt werden, da sie die elementaren Anforderungen an eine durchzuführende Schulung erfüllen. Diese, insbesondere als Basissimulatoren ausgebildete Simulationsrechner können auf zentralen Rechnern zur Verfügung gestellt und mit Hilfe der Internet-Technologie an praktisch jedem Trainingsort genutzt werden.

Mit Hilfe des Verfahrenstechnik-Prozessmodells werden die verfahrenstechnischen Komponenten der Kraftwerksanlage simuliert. Es werden dabei beispielsweise die in der Kraftwerksanlage ablaufenden verfahrenstechnischen Prozesse und die anlagentechnische Realisierung der Kraftwerksanlage mit beispielsweise Kessel, Erhitzer, Rohrleitungen, Ventilen, Pumpen und deren Instrumentierung nachgebildet. Mit dem Verfahrenstechnik-Prozessmodell können außerdem das An- und Abfahren des verfahrenstechnischen Prozesses oder auch Lastschwankungen und deren Auswirkungen auf den genannten Prozess nachgebildet werden. Des Weiteren ist es möglich, Störungen und kritische Zustände des verfahrenstechnischen Prozesses zu simulieren, als Momentaufnahme (Snapshot) zu speichern und zu Schulungszwecken gegebenenfalls zu wiederholen. Das Verfahrenstechnik-Prozessmodell kann dabei den verfahrenstechnischen Prozess in Echtzeit, im Slow- oder im Fast-Mode nachbilden. Ebenso kann vorgesehen sein, den simulierten verfahrenstechnischen Prozess anzuhalten und/oder einzufrieren (Freeze).

Anlagenspezifische Erweiterungen, Anpassungen und Optimierungen des Verfahrenstechnik-Prozessmodells werden über Projektierungswerkzeuge, welche vorteilhaft vom Verfahrenstechnik-Prozessmodell umfasst sind, vorgenommen. Dadurch ist es jederzeit möglich, das Verfahrenstechnik-Prozessmodell zu ändern. Der Zugriff auf und die Bedienung des Projektierungswerkzeugs erfolgt bevorzugt über das Internet mittels des Client-Rechners.

In vorteilhafter Ausgestaltung der Erfindung enthält der Simulationsrechner ein Automatisierungstechnik-Prozessmodell einer zur Überwachung, Steuerung und/oder Regelung der technischen Anlage verwendeten automatisierungstechnischen Einrichtung als Softwareprogramm.

Eine Kraftwerksanlage besteht neben den bereits vorher genannten verfahrenstechnischen Komponenten, welche den verfahrenstechnischen Prozess realisieren, auch aus Automatisierungskomponenten, mittels welchen der verfahrenstechnische Prozess bedient, gesteuert und/oder geregelt wird, so dass die Anlagenkomponenten in einer gewünschten Weise zusammenwirken. Es handelt sich dabei oft um speicherprogrammierbare Steuerungen (SPS), welche ein oder mehrere Steuerungsprogramme zum Betrieb mindestens einer Anlagenkomponente, beispielsweise eines Aggregats wie eines Motors, einer Pumpe usw. enthalten. Derartige Automatisierungsgeräte dienen also unter anderem dazu, den Beitrag einer Anlagenkomponente zum gewünschten verfahrenstechnischen Prozess sicherzustellen, indem die Anlagenkomponente, beispielsweise mittels des im Automatisierungsgerät ablaufenden Steuerungsprogramms, in einem gewünschten Betriebszustand gehalten wird.

Das Automatisierungstechnik-Prozessmodell bildet demnach das Verhalten der Automatisierungsgeräte, insbesondere deren Stelleingriffe auf Anlagenkomponenten, nach. Falls in der realen Kraftwerksanlage zur Automatisierung spezielle Hardwarelösungen eingesetzt sind, so sind diese vorteilhaft ebenfalls vom Automatisierungstechnik-Prozessmodell umfasst.

Besonders vorteilhaft umfasst der Simulationsrechner ein B&B-Softwareprogramm zur Bedienung und Beobachtung der technischen Anlage, welches praktisch unverändert auch in einem Bedien- und Beobachtungssystem der technischen Anlage eingesetzt ist.

In der realen Kraftwerksanlage wird meistens ein Bedien- und Beobachtungssystem eingesetzt, dessen Software auf einem Standard-Betriebssystem abläuft. Mittels dieses B&B-Softwareprogramms sind z.B. eine graphische Darstellung von Prozessbildern mit den aktuellen Messwerten darstellbar und/oder z.B. eine Anlagenkomponente bedienbar und/oder gespeicherte Archivdaten abrufbar und/oder Störungsmeldungen, Meldelisten, usw. abrufbar.

Da das B&B-Softwareprogramm auf dem Bedien- und Beobachtungssystem der Kraftwerksanlage wie erwähnt meist auf einem Standard-Betriebssystem abläuft, kann dieses B&B-Softwareprogramm praktisch unverändert auch auf dem Simulationsrechner ablaufen, da dieser bevorzugt ebenfalls durch ein Standard-Betriebssystem betrieben ist.

Es ist also nicht notwendig, das B&B-Softwareprogramm der realen Kraftwerksanlage auf dem Simulationsrechner mittels eines Modells zu simulieren, sondern es kann das originale B&B-Softwareprogramm des Bedien- und Beobachtungssystems der realen Kraftwerksanlage auf dem Simulationsrechner eingesetzt werden.

Mittels des Client-Rechners kann über das Internet auf den Simulationsrechner zugegriffen und das dort installierte B&B-Softwareprogramm bedient werden. Der Benutzer des Client-Rechners hat dann das Gefühl, vor dem originalen Bedien- und Beobachtungssystem der realen Kraftwerksanlage zu sitzen und die reale Anlage zu bedienen und zu beobachten.

Vorteilhaft enthält der Simulationsrechner ein Projektierungswerkzeug als Softwareprogramm, mittels welchem das Verfahrenstechnik-Prozessmodell und/oder das Automatisierungstechnik-Prozessmodell und/oder das B&B-Softwareprogramm veränderbar sind.

Bei dieser vorteilhaften Ausgestaltung der Erfindung ist es für einen Benutzer des Simulationssystems sehr einfach, das Verfahrenstechnik-Prozessmodell und/oder die anderen genannten Software-Komponenten des Simulationssystems zu verändern, um beispielsweise das Simulationssystem an die sich verändernden Bedienungen in der realen Kraftwerksanlage anzupassen, oder um spezielle Betriebssituationen zu trainieren, insbesondere kritische Situationen.

In einer weiteren vorteilhaften Ausgestaltung der Erfindung ist mittels des mindestens einen Client-Rechners über das Internet ein gezielter Zugriff auf jedes der Softwareprogramme, welche vom Simulationsrechner umfasst sind und welche die Simulation der technischen Anlage betreffen, durchführbar.

Auf diese Weise sind keine speziellen Rechner nötig, um die verschiedenen genannten Softwareprogramme des Simulationsrechners, im Bedarfsfalle auch einzeln, zu bedienen. In einem Falle kann z.B. die alleinige Simulation des verfahrenstechnischen Prozesses gewünscht sein, wohingegen in einem anderen Fall die Simulation der automatisierungstechnischen Geräte der Kraftwerksanlage im Blickpunkt steht.

Der Client-Rechner kann also sozusagen "aus verschiedenen Blickwinkeln" auf den Simulationsrechner zugreifen, ohne dass für diese verschiedenen Zugriffe dafür jeweils spezialisierte Rechner notwendig sind.

Im Folgenden wird ein Ausführungsbeispiel der Erfindung näher dargestellt. Es zeigt:

FIG ein erfindungsgemäßes Simulationssystem, welches den verfahrenstechnischen Prozess, die Automatisierungstechnik und das Bedien- und Beobachtungssystem einer Kraftwerksanlage nachbildet.

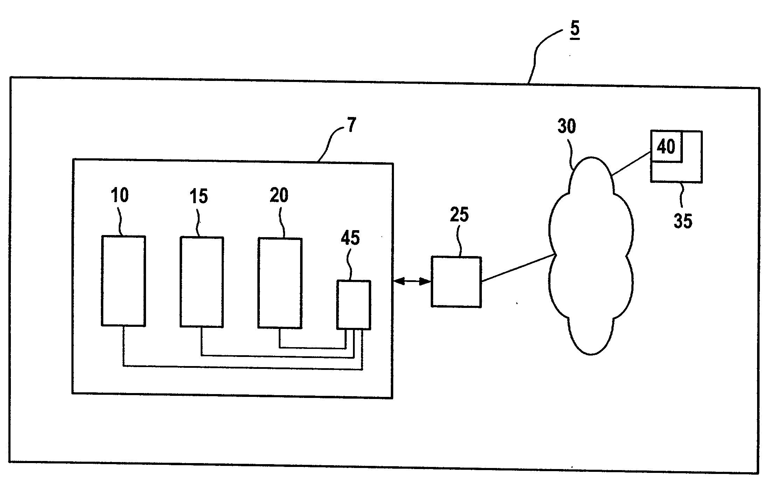

In der Figur ist ein Simulationssystem 5 dargestellt, welches vorteilhaft zur Schulung von Wartenpersonal einer technischen Anlage, welche als Kraftwerksanlage ausgebildet sein kann, einsetzbar ist.

Das Simulationssystem 5 umfasst einen Simulationsrechner 7, auf dem die wesentlichen softwaretechnischen Modelle für die Simulation abgespeichert sind. Dies sind im Wesentlichen:
a) Ein Verfahrenstechnik-Prozessmodell 10, welches den in der technischen Anlage ablaufenden verfahrenstechnischen Prozess, wie z.B. einen GuD-Prozess, welcher von einer Reihe zusammenwirkender Anlagenkomponenten (Kessel, Erhitzer, Rohrleitungen, Ventile, Pumpen, Instrumentierung usw.) erzeugt ist, nachbildet, z.B. mittels einer grafischen Darstellung der Anlagenkomponenten und der Verbindungen zwischen diesen sowie eines mathematischen Modells bestehend aus einem Satz von Gleichungen, welche die abhängigen und unabhängigen Größen des Prozesses zueinander in Beziehung setzt und dessen Lösung (nach Ein- bzw. Vorgabe der unabhängigen Größen) mathematisch das z.B. zeitliche Verhalten der Größen des Prozesses und damit den Prozess beschreibt, und
b) ein Automatisierungstechnik-Prozessmodell 15, welches die Funktionalität von Automatisierungsgeräten, welche in der realen technischen Anlage zur Überwachung und Steuerung und/oder Regelung von Anlagenkomponenten eingesetzt sind, nachbildet; das Automatisierungs-Prozessmodell 15 umfasst bevorzugt einen weiteren Satz von mathematischen Gleichungen, insbesondere zur Nachbildung der in den Automatisierungsgeräten eingesetzten Steuerungs- und/oder Regelungsalgorithmen; falls Automatisierungsfunktionen in der realen technischen Anlage in Form einer Hardware-Lösung realisiert sind (z.B. aus Gründen der Verfügbarkeit und/oder einer geforderten möglichst schnellen Bearbeitung der Funktion), so sind diese Funktionen vom Automatisierungstechnik-Prozessmodell 15 umfasst.

Der Simulationsrechner 7 enthält weiterhin ein B&B-Softwareprogramm 20, welches die Funktionalität eines in der realen technischen Anlage eingesetzten Bedien- und Beobachtungssystems auf dem Simulationsrechner 7 verfügbar macht. Dieses B&B-Softwareprogramm ist bevorzugt im Wesentlichen identisch mit dem Softwareprogramm, welches auf dem realen Bedien- und Beobachtungssystem eingesetzt ist; insofern ist keine Simulation dieses Systems notwendig.

Außerdem verfügt der Simulationsrechner 7 über ein Projektierungswerkzeug 45, mittels welchem die zuvor genannten Programme 10, 15, 20 veränderbar sind, so dass das Simulationssystem besonders leicht an veränderte Anforderungen und/oder eine veränderte technische Anlage anpassbar ist. Das Projektierungswerkzeug 45 eignet sich besonders, um eines oder mehrere der Programme 10, 15, 20 derart zu verändern, dass Betriebssituationen der technischen Anlage simulierbar sind, welche nicht ohne Gefährdung von Mensch und/oder Material an der realen technischen Anlage erzeugbar wären, insbesondere kritische Betriebssituationen. Das Wartenpersonal kann so den Umgang mit derartigen, nicht alltägliche, Betriebssituationen üben und deren Beherrschung erlernen.

Der Simulationsrechner ist über einen Web-Server 25 mit dem Internet 30 verbunden, so dass mittels eines Client-Rechners 35, welcher einen Internet-Browser 40 umfasst, ein Zugriff über das Internet 30 auf den Simulationsrechner ermöglicht ist. Der Web-Server 25 stellt dabei eine Schnittstelle zur Verfügung, über welche die Programme 10, 15, 20, welche die Simulation der technischen Anlage ermöglichen, über das Internet 30 von jedem beliebigen Ort mit Internet-Zugang aus zugänglich und mittels des Client-Rechners 35 nutzbar sind.

Der Simulationsrechner 7 kann mehrere Verfahrenstechnik-Prozessmodelle 10, mehrere Automatisierungstechnik-Prozessmodelle 15, sowie mehrere B&B-Softwareprogramme 20, welche zueinander verschiedenen realen technischen Anlagen zugeordnet sind, umfassen. So ist es möglich, mit einem einzigen Simulationsrechner 7 an einer zentralen Stelle für eine Anzahl von technischen Anlagen die wesentlichen "Simulationsbausteine" zur Verfügung zu stellen, auf welche dann von beliebigen, auch zueinander verschiedenen, Orten über das Internet 30 gezielt mittels eines oder auch mehrerer, räumlich verteilter, Client-Rechner 35 zugegriffen werden kann.

Eines oder mehrere der Programme 10, 15, 20 können weiterhin so ausgestaltet sein, dass sie die wesentlichen Eigenschaften und das prinzipielle Verhalten eines bestimmten Typs einer realen technischen Anlage, insbesondere einer GuD-Kraftwerksanlage, simulieren. Auf diese Weise ist durch den Simulationsrechner ein "Basissimulator" gebildet, welcher für eine Anzahl an realen technischen Anlage des gleichen Typs, aber nicht notwendig der gleichen Auslegung, als Schulungsinstrument nutzbar ist. Dadurch ist der Aufwand für die Bereitstellung eines Simulationssystem, welches zu Schulungszwecken für eine Anzahl an realen technischen Anlagen genutzt werden kann, minimiert. Des Weiteren ist dabei auch die Auslastung des Simulationssystems optimiert.

## Patentansprüche

1. Simulationssystem (5),
**gekennzeichnet durch** folgende Komponenten:
a) mindestens ein Simulationsrechner (7), welcher mindestens ein Verfahrenstechnik-Prozessmodell (10) einer zu simulierenden technischen Anlage als Softwareprogramm und einen Web-Server (25) zur Anbindung an das Internet (30) und/oder ein Intranet umfasst, so dass ein Zugriff auf das Prozessmodell über das Internet (30) und/oder das Intranet durchführbar ist, und
b) mindestens einen Client-Rechner (35), welcher einen Internet-Browser (40) zur Anbindung des Client-Rechners an das Internet (30) und/oder das Intranet umfasst.

2. Simulationssystem (5) nach Anspruch 1,
**dadurch gekennzeichnet, dass** der Simulationsrechner (7) ein Automatisierungstechnik-Prozessmodell (15) einer zur Überwachung, Steuerung und/oder Regelung der technischen Anlage verwendeten automatisierungstechnischen Einrichtung als Softwareprogramm enthält.

3. Simulationssystem (5) nach einem der Ansprüche 1 oder 2,
**dadurch gekennzeichnet, dass** der Simulationsrechner (7) ein B&B-Softwareprogramm (20) zur Bedienung und Beobachtung der technischen Anlage umfasst, welches praktisch unverändert auch in einem Bedien- und Beobachtungssystem der technischen Anlage eingesetzt ist.

4. Simulationssystem (5) nach den Ansprüchen 1 und 2 und 3,
**dadurch gekennzeichnet, dass** der Simulationsrechner (7) ein Projektierungswerkzeug (45) als Softwareprogramm enthält, mittels welchem das Verfahrenstechnik-Prozessmodell (10) und/oder das Automatisierungs-Prozessmodell (15) und/oder das B&B-Softwareprogramm (20) veränderbar sind.

5. Simulationssystem (5) nach einem der Ansprüche 1 bis 4,
**dadurch gekennzeichnet, dass** mittels des mindestens einen Client-Rechners (35) über das Internet (30) ein gezielter Zugriff auf jedes der Softwareprogramme (10, 15, 20, 45), welche vom Simulationsrechner (7) umfasst sind und welche die Simulation der technischen Anlage betreffen, durchführbar ist.
